# EUROPEAN PATENT SPECIFICATION

(11) **EP 2 511 318 B1**
(45) Date of publication and mention of the grant of the patent: **21.02.2018**
(21) Application number: 10836039.7
(22) Date of filing: 09.12.2010
(51) Int. Cl.: C08G 61/12, C08F 36/04, C08G 73/00, C09K 19/32, C09K 19/34, C08L 65/00, C09K 19/38

(54) **METHOD FOR PRODUCING CONJUGATED POLYMER**
VERFAHREN ZUR HERSTELLUNG EINES KONJUGIERTEN POLYMERS
PROCÉDÉ POUR PRODUIRE UN POLYMÈRE CONJUGUÉ

(30) Priority: 11.12.2009 JP 2009282010
(43) Date of publication of application: 17.10.2012
(73) Proprietor: FUJIFILM Corporation, Tokyo 106-8620 (JP)
(72) Inventor: TAKAKU, Koji, Ashigarakami-gun Kanagawa 258-8577 (JP)
(74) Representative: Hoffmann Eitle
(86) International application number: PCT/JP2010/072155
(87) International publication number: WO 2011/071119

(56) References cited:
- JP-A- 2001 002 934
- JP-A- 2006 131 758
- JP-A- 2008 223 016
- JP-A- 2010 083 919
- HIROMASA GOTO: "Electrochemical polymerization of pyrrole in cholesteric liquid crystals: Morphology and optical properties", JOURNAL OF POLYMER SCIENCE PART A: POLYMER CHEMISTRY, vol. 45, no. 8, 15 April 2007 (2007-04-15) , pages 1377-1387, XP055110248, ISSN: 0887-624X, DOI: 10.1002/pola.21900
- HIROYUKI YONEYAMA ET AL: "Preparation of Optically Active Pyridine-Based Conducting Polymer Films Using a Liquid Crystal Electrolyte Containing a Cholesterol Derivative", MACROMOLECULES, vol. 40, no. 15, 1 July 2007 (2007-07-01), pages 5279-5283, XP055110265, ISSN: 0024-9297, DOI: 10.1021/ma070247h
- HIROMASA GOTO ET AL: "Preparation of Poly(3,4-ethylenedioxythiophene) in a Chiral Nematic Liquid-Crystal Field", MACROMOLECULAR RAPID COMMUNICATIONS, vol. 25, no. 16, 26 August 2004 (2004-08-26), pages 1482-1486, XP055110319, ISSN: 1022-1336, DOI: 10.1002/marc.200400184
- HIROMASA GOTO: "An Optically Active Polythiophene Exhibiting Electrochemically Driven Light-Interference Modulation", ADVANCED FUNCTIONAL MATERIALS, vol. 19, no. 9, 8 May 2009 (2009-05-08), pages 1335-1342, XP055110325, ISSN: 1616-301X, DOI: 10.1002/adfm.200801782
- PIAO G. ET AL: 'Advanced Conjugated Polymer. Helical Polyacetylene' POLYM ADV TECHNOL vol. 11, no. 8/12, 2000, pages 826 - 829, XP000977370
- LEO A J: "calculating log(p-oct) from structures", CHEMICAL REVIEWS, AMERICAN CHEMICAL SOCIETY, US, vol. 93, no. 4, 1 June 1993 (1993-06-01), pages 1281-1306, XP002116731, ISSN: 0009-2665, DOI: 10.1021/CR00020A001

## Description

### [Technical Field]

The present invention relates a method of preparing a conjugated polymer.

### [Related Art]

Conjugated polymers (conductive polymers) are used in electronic devices and the like, and much research has been conducted with a view to improving the conductivity of conjugated polymers. Generally, it is expected that a significant increase in conductivity can be attained or anisotropic conductivity can be imparted to the polymers by controlling the alignment of conjugated polymers (conductive polymers). As a method for controlling alignment, a method in which a polymer is prepared in a medium such as a liquid crystal is known, and Shirakawa, Akagi et al. report that a polyacethylene synthesized by chemical polymerization in a liquid crystal exhibits high conductivity (see, for example, non-patent document 1).

Further, it is known that conjugated polymers (conductive polymers) can be prepared not only by chemical polymerization but also by electropolymerization, and it has been reported that as a result of carrying out electropolymerization of EDOT (ethylene dioxithiophene) in a lyotropic liquid crystal template, the obtained EDOT exhibits high mobility and anisotropic conductivity (see, for example, non-patent documents 2 and 3).

However, the methods mentioned above, in which conjugated polymers are prepared in a mixed system of water and liquid crystal, are not suitable for electronic devices that need to avoid exposure to water. One way of preparing conjugated polymers in a non-aqueous system is to cause a reaction in a thermotropic liquid crystal. In this method, however, the reaction rate of polymerization is extremely low due to factors such as the low solubility of a supporting electrolyte with respect to a liquid crystal, which is an essential substance for electropolymerization, or the relatively high viscosity of a thermotropic liquid crystal as compared with solvents that are commonly used. Therefore, despite the considerable research, few liquid crystals are known for this purpose, and no conjugated polymer that is aligned and ordered sufficiently to attain high conductivity and anisotropy is known (see, for example, Patent documents 1 and 2).

### [Prior Art Documents]

### [Patent Document]

Patent document 1: DE 3533252 A1
Patent document 2: Japanese Patent Application Laid-Open No. 2003-306531

### [Non-patent Document]

Non-patent document 1: Polymer Journal, 19, 185 (1987)
Non-patent document 2: Angew. Chem. Int. Ed., 42, 778 (2003)
Non-patent document 3: Adv. Mater., 16, 589 (2004)

Journal of Polymer Science Part A: Polymer Chemistry, vol. 45, no. 8, pages 1377-1387 teaches the preparation of highly ordered electroconductive polyarylenes by means of *in-situ* electropolymerization of arylene monomers in chiral nematic/cholesteric liquid crystalline phases in the presence of a chiral dopant and an electrolyte. Similar teachings can be found in each of Macromolecules, vol. 40, no. 15, pages 5279-5283, Macromolecular Rapid Communications, vol. 25, no. 16, pages 1482-1486 and Advanced Functional Materials, vol. 19, no. 9, pages 1335-1342.

### [Summary of the Invention]

### [Object to be Addressed by the Invention]

The object of the invention is to provide a method of preparing a conjugated polymer that is sufficiently aligned and ordered at a high reaction rate.

### [Means for Solution]

The inventors conducted intensive research and, as a result, found that a conjugated polymer that is sufficiently aligned and ordered can be prepared at a high reaction rate by carrying out electropolymerization of a monomer in a thermotropic liquid crystal composition that satisfies specific conditions.

According to the present invention, there is provided a method of preparing a conjugated polymer comprising:
incorporating at least one monomer and 0.01 to 10% by mass of tetrabutylammonium perchlorate as a supporting electrolyte into a nematic liquid crystal composition, the amount of the supporting electrolyte being based upon 100% by mass of the nematic liquid crystal composition; and
electropolymerizing the at least one monomer incorporated in the nematic liquid crystal composition,
characterized in that the conjugated polymer is polythiophene and the nematic liquid crystal composition has a solid-liquid crystal phase transition temperature of 25°C or lower, an isotropic phase transition temperature of 55°C or higher, and a clogP value of 6 or less calculated with ChemDraw Ultra 8.0 based on the Hansch-Leo fragment method, the solid-liquid crystal phase transition temperature and the isotropic phase transition temperature being measured by a method in which the liquid crystal phase is identified with a polarization microscope.

Preferably the content of non-liquid crystal liquid other than the monomer in the nematic liquid crystal composition is 5% by mass or less.

Preferably the nematic liquid crystal composition comprises at least one compound having an isotropic phase transition temperature of 100°C or higher. In this case, the nematic liquid crystal composition further comprises at least one compound having a solid-liquid crystal phase transition temperature of 40°C or lower.

Preferably the nematic liquid crystal composition comprises at least one dioxane compound.

Preferably the electropolymerizing is performed at a temperature of 50°C or lower. Preferably the nematic liquid crystal composition incorporating the at least one monomer and the supporting electrolyte is disposed between a pair of electrode substrates facing each other. In this case, the electrode substrates preferably have been treated with a silane coupling agent and/or by rubbing.

Preferably the nematic liquid crystal composition orientates horizontally or vertically with respect to the electrode substrates when a voltage is applied to the electrode substrates.

Preferably the nematic liquid crystal composition orientates uniaxially when a voltage is applied to the electrode substrates.

### [Effect of the Invention]

According to the invention, a conjugated polythiaphene polymer that is sufficiently aligned and ordered can be prepared at a high reaction rate.

### [Embodiments for Implementing the Invention]

In the following, details of the invention are described. In the present specification, a numerical range represented by A to B refers to a range including A and B as the maximum and minimum values.

In the method of preparing a conjugated polymer according to the invention, electropolymerization is carried out by including at least one kind of monomer and a supporting electrolyte in a nematic liquid crystal composition that has a solid-liquid crystal transition temperature of 25°C or lower and an isotropic transition temperature of 55°C or higher, and a clogP value of 6 or less. According to the invention, a method of preparing a conjugated polymer that is sufficiently aligned and ordered at a high reaction rate can be provided.

Generally, the viscosity of a liquid crystal composition is increased as its isotropic transition temperature is increased, whereby the reactivity of a monomer is lowered. Therefore, lowering of the isotropic transition temperature has been desired from the viewpoint of conducting electropolymerization in a state in which the reactivity of the monomer is enhanced. However, it has been found that if a liquid crystal composition having a low isotropic transition temperature is used as a reaction field for electropolymerization, the obtained conjugated polymer exhibits a low degree of alignment.

However, in the method of the invention, the reactivity of the monomer is not lowered and the obtained conjugated polymer is highly aligned.

The reason why the conjugated polymer prepared in the method of the invention exhibits a high degree of anisotropy has not been identified, but is presumed to be as follows.

In oxidative electropolymerization, a surface of an electrode serves as an initiation site for polymerization. Therefore, the reaction progresses as a result of supplying the monomer to the vicinity of the electrode. During the reaction, adjacent liquid crystals are aligned in a highly ordered manner, and the direction of monomer supply and the direction of polymer growth are made to conform to the alignment of the liquid crystals. As a result, it is presumed that the obtained conjugated polymer exhibits a high degree of anisotropy. In particular, it is presumed that by using a nematic liquid crystal composition having an isotropic transition temperature of 55°C or higher, fluctuation in alignment of liquid crystals in the composition is suppressed and the liquid crystals are more highly ordered, whereby the order of the obtained polymer (conjugated polymer) is yet further improved.

Further, one factor in increasing the reactivity of the monomer is considered to be an increase in the solubility of the supporting electrolyte with respect to the nematic liquid crystal composition, which is achieved by increasing the hydrophilicity of the nematic liquid crystal composition by lowering its clogP value. In this regard, simply increasing the solubility of the supporting electrolyte does not necessarily cause an increase in the reactivity of the monomer. However, it has been demonstrated that the reactivity of the monomer is increased with a nematic liquid crystal composition that satisfies the conditions specified by the invention.

In addition, it has been confirmed that the order of the obtained polymer (conjugated polymer) is improved by the synergistic effect of using a nematic liquid crystal composition that has an isotropic transition temperature of 55°C or higher and a clogP value of 6 or less as a reaction field.

In the following, the materials used for the method of the invention are explained.

### <Nematic liquid crystal composition>

The nematic liquid crystal composition according to the invention has a solid-liquid crystal transition temperature of 25°C or lower and an isotropic transition temperature of 55°C or higher, and a clogP value of 6 or less.

The solid-liquid crystal transition temperature refers to a temperature at which a liquid crystal composition turns from a solid phase to a liquid crystal phase. The isotropic transition temperature refers to a temperature at which a liquid crystal composition turns from a liquid crystal phase to an isotropic liquid phase.

The solid-liquid crystal transition temperature and the isotropic transition temperature are measured by identifying a liquid crystal phase with a polarization microscope, TG-DTA and DSC. Specifically, in the observation with a polarization microscope, when a solid is melted and turns to a liquid state and a dark field is observed in a cross nicol state (polarization plates are orthogonally crossed) of the polarization microscope at a certain temperature, the temperature is specified as a solid-liquid crystal transition temperature. When a bright field turns to a dark field in the observation with a polarization microscope at a certain temperature, the temperature is specified as an isotropic transition temperature.

The solid-liquid crystal transition temperature of the nematic liquid crystal composition is more preferably 20°C or lower, further preferably 15°C or lower, in view of the temperature at which electropolymerization is carried out.

The isotropic transition temperature of the nematic liquid crystal composition is desirably higher, more preferably 55°C or higher, further preferably 75°C or higher, since the degree of order of the obtained conjugated polymer is increased as the isotropic transition temperature is increased.

A nematic liquid crystal composition that has a solid-liquid crystal transition temperature and an isotropic transition temperature as specified above exhibits a liquid crystal phase in a reaction field for electropolymerization.

Further, the clogP value of the nematic liquid crystal composition is desirably lower, more preferably 5 or less, further preferably 4.5 or less, since solubility of a supporting electrolyte is increased as the clogP value is decreased.

The clogP value is calculated by a program based on a fragment method of Hansch-Leo, in which a chemical structure is divided into partial structures (fragments) and the clogP value is estimated from the total of portions that contribute to clogP assigned to the fragments. Details of the clogP value are described in C. Hansch & A. Leo. Substituent Constants For Correlation Analysis in Chemistry and Biology. John Wiley & Sons. and A. J. Leo. Calculating logPoct from structure. Chem. Rev., 93, 1281-1306, 1993.

One example of the method of preparing a nematic liquid crystal composition that satisfies the solid-liquid crystal transition temperature, isotropic transition temperature and the clogP value as specified above is a method of preparing a liquid crystal composition that satisfies these ranges by mixing two or more kinds of liquid crystals. Specifically, there is a method of mixing a liquid crystal having a low solid-liquid crystal transition temperature and a low clogP value and a liquid crystal having a high isotropic transition temperature. A method that is more preferred is a method of mixing a liquid crystal having a low solid-liquid crystal transition temperature and a low clogP value and a liquid crystal having a low clogP value and a high isotropic transition temperature.

In the following, specific components of the nematic liquid crystal composition are explained.

### (Liquid crystal)

The liquid crystal used as a reaction field for electropolymerization is not particularly restricted as long as it has a solid-liquid crystal transition temperature, an isotropic transition temperature and a clogP value as specified above, and the liquid crystal is a nematic liquid crystal in view of suppressing viscosity to a low level.

The nematic liquid crystal composition that satisfies the solid-liquid crystal transition temperature, isotropic transition temperature and clogP value preferably includes at least one kind of liquid crystal that has an isotropic transition temperature of 100°C or higher (hereinafter, also referred to as a first liquid crystal). By adding a first liquid crystal, a nematic liquid crystal composition having an isotropic transition temperature of 55°C or higher can be prepared.

The isotropic transition temperature of the first liquid crystal is preferably 120°C or higher, more preferably 150°C or higher, even more preferably 170°C or higher.

The clogP value of the first liquid crystal is not particularly restricted, but it is preferably 8 or less, more preferably 7 or less, even more preferably 6 or less. The solid-liquid crystal transition temperature of the first liquid crystal is not particularly restricted, but it is preferably 150°C or lower, more preferably 135°C or lower, even more preferably 120°C or lower.

Further, by including, in addition to the first liquid crystal, a liquid crystal having a solid-liquid crystal transition temperature of 25°C or lower (hereinafter, also referred to as a second liquid crystal), a nematic liquid crystal composition having a solid-liquid crystal transition temperature of 25°C or lower, an anisotropic transition temperature of 55°C or higher and a clogP value of 6 or less can be prepared.

The solid-liquid crystal transition temperature of the second liquid crystal is preferably 20°C or lower, more preferably 15°C or lower, even more preferably 10°C or lower.

The isotropic transition temperature of the second liquid crystal is preferably 30 °C or higher, more preferably 40°C or higher, even more preferably 50°C or higher.

The clogP value of the second liquid crystal is preferably 6 or less, more preferably 5 or less, even more preferably 4 or less, still more preferably 3 or less.

In order to adjust the clogP value of the nematic liquid crystal composition to 6 or less, it is desirable to use a first liquid crystal having a low clogP value and a second liquid crystal having a low clogP value, respectively.

In the following, specific compounds used as the first liquid crystal and the second liquid crystal are explained.

The first liquid crystal is not particularly restricted as long as it has an isotropic transition temperature of 100°C or higher. However, a compound having three or more cyclic group is preferred in view of having a high isotropic transition temperature.

The cyclic group is preferably a heterocyclic group (dioxane ring group, pyridine ring group, pyrimidine ring group or the like), an aryl group (a phenyl group or the like), an aliphatic hydrocarbon group (cyclohexane ring group or the like). From the viewpoint of having a low clogP value, a compound having at least one dioxane ring group is preferred.

The three cyclic groups may be linked via a single bond or via a divalent linking group. Each of the cyclic groups may have a substituent.

Each of the linking portions for the three cyclic groups is independently preferably a single bond, an ester group (-O-CO-, -CO-O-), an ether group, a substituted or unsubstituted alkylene group, or a substituted or unsubstituted methyleneoxy group; more preferably a single bond, an ester group (-O-CO-, -CO-O-), an ether group, or a substituted or unsubstituted methyleneoxy group; even more preferably a single bond, an ester group, or a substituted or unsubstituted methyleneoxy group.

The first liquid crystal is preferably a compound represented by the following Formula (1).

Formula (1) **(T¹)ₙ-(D¹)ₖ-((L¹)_{f}-(D²)ₑ)ₘ-(T²)ₚ**

In Formula (1), D¹ and D² each independently represent a heterocyclic group (for example, dioxane ring group, pyridine ring group, pyrimidine ring group or the like), an aryl group (for example, phenyl group or the like) or an aliphatic hydrocarbon group (for example, cyclohexane ring group or the like). Preferably, D¹ represents a (n+1) valent dioxane ring group or a (n+1) valent cyclohexane ring group, and D² represents a (p+1) valent benzene ring group or a (p+1) valent cyclohexane ring group. More preferably, D¹ represents a (n+1) valent dioxane ring group, and D² represents a (p+1) valent benzene ring group. When e is 2 or more, or m is 2 or more, 2 or more of D² are independently selected.

In Formula (1), n and p each independently represent an integer of 1 or more and 5 or less, preferably an integer of 1 or more and 3 or less, and more preferably an integer of 1 or more and 2 or less.

In Formula (1), k and 1 each independently represent 1 or 2; f represents 0 or 1, e represents 1 or 2, and m represents 1 or 2. More preferably, when e is 1, m represents 2, and when e is 2, m represents 1.

In Formula (1), L¹ preferably represents an ester group (-O-CO-, -CO-O-), an ether group, a substituted or unsubstituted alkylene group, or a substituted or unsubstituted methylenoxy group; more preferably an ester group (-O-CO-, -CO-O-), an ether group, or a substituted or unsubstituted methylenoxy group; and even more preferably an ester group or a substituted or unsubstituted methylenoxy group.

In Formula (1), T¹ and T² each independently represent a cyano group, a halogen atom (F, Cl), an alkyl group, an alkoxy group, an acyl group, an acyloxy group, alkoxycarbonyl group, an alkylcarbamoyl group or alkylamido group. T¹ preferably represents an alkyl group or an alkoxy group. T² preferably represents a cyano group, a halogen atom (F, Cl), an alkyl group, an alkoxy group, an acyl group, an acyloxy group or alkoxycarbonyl group; more preferably a cyano group, a halogen atom (F, Cl), an alkyl group or an alkoxy group; and particularly preferably a cyano group or an alkyl group.

T¹ and T² may each independently bond to any position(s) of D¹ and D², and preferably bond at 4 position which is a terminal position in the direction of the long axis of a molecule.

The compound represented by Formula (1) is particularly preferably a compound represented by Formula (1-1).

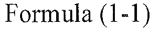

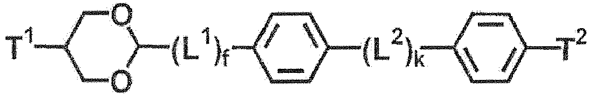

In Formula (1-1), T¹ represents an alkyl group, and T² represents a cyano group, a halogen atom (F, Cl), an alkyl group, an alkoxy group, an acyl group, an acyloxy group, alkoxycarbonyl group, an alkylcarbamoyl group or alkylamido group; preferably a cyano group, a halogen atom (F, Cl), an alkyl group, an alkoxy group, an acyl group, an acyloxy group or alkoxycarbonyl group; more preferably a cyano group, a halogen atom (F, Cl), an alkyl group or an alkoxy group; and particularly preferably a cyano group or an alkyl group.

In Formula (1-1), L¹ represents an ester group (-CO-O-), a substituted or unsubstituted alkylene group, or a substituted or unsubstituted methylenoxy group, and preferably an ester group (-CO-O-); L² represents an ester group (-O-CO-, -CO-O-), an ether group, a substituted or unsubstituted alkylene group, a substituted or unsubstituted methylenoxy group; preferably an ester group (-O-CO-, -CO-O-), a substituted or unsubstituted alkylene group, a substituted or unsubstituted methyleneoxy group; more preferably an ester group (-O-CO-, -CO-O-), a substituted or unsubstituted methyleneoxy group; and particularly preferably an ester group (-O-CO-, -CO-O-).

In Formula (1-1), f represents 0 or 1, and k represents 0 or 1.

The second liquid crystal is not particularly restricted as long as it has a solid-liquid crystal transition temperature of 25°C or lower. However, in order to have a lower clogP value, the second liquid crystal is preferably a compound having a dioxane ring group, or preferably a compound having two cyclic groups.

In order to have a lower clogP value, the second liquid crystal preferably has at least one heterocyclic group (dioxane ring group, pyridine ring group, pyrimidine ring group or the like), more preferably a dioxane ring group. More preferably, the second liquid crystal further has an aryl group (phenyl group or the like), an aliphatic hydrocarbon group (cyclohexane ring group or the like).

The two cyclic groups may be linked via a single bond or via a divalent linking group. Each of the cyclic groups may have a substituent, respectively.

The linking portion between the two cyclic groups is preferably a single bond, an ester group (-O-CO-, -CO-O-), an ether group, a substituted or unsubstituted alkylene group, or a substituted or unsubstituted methyleneoxy group; more preferably a single bond, an ester group (-O-CO-, -CO-O-), a substituted or unsubstituted alkylene group or a substituted or unsubstituted methyleneoxy group; even more preferably a single bond or an ester group (-O-CO-, -CO-O-).

The second liquid crystal is more preferably a compound represented by the following Formula (2).

Formula (2) **(T¹)ₙ-(D¹)ₕ-((L¹)ⱼ-(D²)_{g})ᵢ-(T²)ₚ**

In Formula (2), D¹, D², L¹, T¹, T², n and p respectively have the same definition as D¹, D², L¹, T¹, T², n and p in Formula (1).

In Formula (2), h represents 1 or 2, j represents 0 or 1, g represents 1 or 2, and i represents 1 or 2. Preferably, h, g, and i are respectively 1.

From the viewpoint of increasing solubility of the first liquid crystal or solubility of a supporting electrolyte, which will be described later, the second liquid crystal is preferably a mixture of compounds represented by Formula (2).

Here, two or more kinds, preferably three or more kinds, of compounds that are represented by Formula (2), each having an alkyl group T¹ whose carbon number is different from each other, are mixed. The alkyl group whose carbon number is different from each other is preferably at least one selected from those including even number of carbon atoms, and at least one selected from those including an odd number of carbon atoms, respectively. The carbon number is from 1 to 12, preferably from 2 to 8, more preferably from 3 to 7.

The ratio of the first liquid crystal to the second liquid crystal is preferably adjusted appropriately in view of the solid-liquid crystal transition temperature, the isotropic transition temperature and a clogP value. Generally, the mass ratio of first liquid crystal: second liquid crystal is preferably from 1:99 to 45:55, more preferably from 5:95 to 40:60, even more preferably 10:90 to 35:65.

### <Monomer>

In the method of preparing a conjugated polythiophene of the invention, a monomer which corresponds to the conjugated polythiophene is suitably used.

### <Supporting electrolyte>

In the method of preparing a conjugated polymer of the invention, tetrabutylammonium perchlorate as a supporting electrolyte for imparting conductivity is added to the nematic liquid crystal composition that serves as a reaction field for electropolymerization. The supporting electrolyte does not inhibit electropolymerization reaction and imparts sufficient conductivity to the nematic liquid crystal composition.

The content of the supporting electrolyte is from 0.01% by mass to 10% by mass, more preferably from 0.1% by mass to 5% by mass, even more preferably from 0.2% by mass to 3% by mass, with respect to the nematic liquid crystal composition (100% by mass).

### <Other additives>

The nematic liquid crystal composition may include a liquid that is not liquid crystal, such as a solvent, in view of improving polymerization reactivity. However, if a liquid that is not liquid crystal such as a solvent is included in the nematic liquid crystal composition, the isotropic transition temperature of the nematic liquid crystal is significantly lowered. Therefore, depending on the amount of the liquid that is not liquid crystal such as a solvent, electropolymerization may be carried out in a state in which the anisotropy of the nematic liquid crystal composition is lowered. This is not preferred since the degree of order of the obtained polymer tends to be lowered.

The content of the liquid that is not liquid crystal such as a solvent is preferably 5% by mass or less, more preferably 3% by mass or less, even more preferably substantially zero. The substantially zero refers to an amount that does not exceed the amount contained as impurities.

On the other hand, according to the invention, it is possible to prepare a conjugated polymer at a high reaction rate without adding a liquid that is not liquid crystal such as a solvent, since monomers are electropolymerized due to a high reactivity thereof.

### <Electropolymerization>

In the electropolymerization of a conjugated polymer, the voltage to be applied may be selected appropriately in view of the type of the monomer (i.e., the conjugated polymer to be obtained), liquid crystal reaction field or electrode material. For example, as illustrated in the examples to be described later, the electropolymerization of thiophene can be carried out with a voltage of approximately 2V to 4V. However, the voltage is not restricted to such examples.

From the viewpoint of increasing the degree of order of the obtained conjugated polymer, it is preferred to lower the voltage to be applied. For example, in a case of electropolymerization of thiophene, the order parameter value, which is an indicator for the degree of order of the obtained conjugated polymer, tends to be higher when a voltage of approximately 4V is applied, as compared with the case in which a voltage of approximately 2V is applied.

Further, from the viewpoint of obtaining a sufficient reaction rate while increasing the degree of order of the obtained conjugated polymer, it is preferred to apply a voltage in two or more steps, as described below. Specifically, after application of a first voltage for 5 minutes in which the polymerization reaction rate reaches from 5% to 30%, a second voltage for 5 minutes in which the polymerization reaction rate reaches 50% or more is applied.

The first voltage is more preferably a voltage in which the polymerization reaction rate reaches from 5% to 25% in 5 minutes, even more preferably a voltage in which the polymerization reaction rate reaches from 8% to 20% in 5 minutes.

The second voltage is more preferably a voltage in which the polymerization reaction rate reaches 60% or more in 5 minutes, even more preferably a voltage in which the polymerization reaction rate reaches 65% or more in 5 minutes.

The first voltage and the second voltage are preferably adjusted appropriately in view of the type of the monomer, nematic liquid crystal, supporting electrolyte, and the like. As shown in the examples described below, in a case of electropolymerization of terthiophene, the first voltage is preferably less than 3V, more preferably from 1V to 2V, and the second voltage is preferably from 2V to 5V, more preferably from 2V to 4V.

The time for application of the first voltage is preferably determined such that the polymerization reaction rate is from 5% to 30%. In a case of electropolymerization of terthiophene, the first voltage is preferably applied for from 1 minute to 10 minutes, more preferably from 1 minute to 3 minutes. The proportion of application time for the first voltage with respect to the total application time is preferably from 1% to 60%, more preferably from 10% to 50%.

In order to obtain a highly ordered conjugated polymer, the electropolymerization is preferably carried out at a temperature of 50°C or lower, more preferably at a temperature of from 15°C to 40°C, even more preferably at a temperature of from 20°C to 30°C, from the viewpoint or not lowering the degree of order of the nematic liquid crystal.

The electrode used for electropolymerization is not particularly restricted, and examples thereof include metal electrodes of gold, silver, platinum or the like, carbon electrodes, and transparent glass electrodes of indium tin oxide (ITO). The electrode may be selected appropriately according to the type of the monomer (i.e., the conjugated polymer to be obtained), liquid crystal and the like, or the amount of the polymer to be obtained.

More preferably, an electrode made of ITO substrate is suitable for use in devices that need to transmit light, such as organic EL devices and photovoltaic cells.

From the viewpoint of aligning a nematic liquid crystal to a high degree of order and obtaining a thin film of a large area, it is preferred to sandwich the nematic liquid crystal containing the monomer and the supporting electrolyte between a pair of electrode substrates. When a voltage is applied to the pair of electrodes, polymerization of the monomer in the nematic liquid crystal is initiated at the electrodes, thereby causing growth of a polymer.

From the viewpoint of aligning the nematic liquid crystal at a high degree of order and suppressing disorder in alignment during polymerization, the gap between the pair of electrode substrates is preferably 100 µm or less, more preferably from 0.1 µm to 70 µm, even more preferably from 1 µm to 50 µm.

The electrode substrates are preferably treated with a silane coupling agent. Polyimide, which is typically used as an alignment film, is not suitable for electropolymerization due to its insulating property. However, in a case of a silane coupling agent, the monomolecular film hardly reduces conductivity and does not inhibit electrolyte polymerization. Further, it is presumed that on an electrode substrate treated with a silane coupling agent, a monomolecular film of the monomer is formed first, and a polymer is subsequently grown. Therefore, it is suitable to conduct electrolyte polymerization with an electrode substrate treated with a silane coupling agent, since the degree of order of the obtained polymer is increased.

It is further preferred if the electrode substrate is subjected to rubbing treatment, since the degree of order of the obtained conjugated polymer is even more increased.

In this regard, in a case in which the silane coupling agent is highly hydrophilic, the nematic liquid crystal composition is aligned horizontally with respect to the electrode substrate, and the conjugated polymer obtained by electropolymerization is grown horizontally with respect to the electrode substrate, along the alignment of the nematic liquid crystal composition. Conjugated polymers that are aligned horizontally with respect to electrode substrates are suitably used for applications such as transparent electrodes, touch panels, organic EL devices and photovoltaic cells.

On the other hand, in a case in which the silane coupling agent is highly hydrophobic, the nematic liquid crystal composition is aligned perpendicular to the electrode substrate, and the conjugated polymer obtained by electropolymerization is grown perpendicular to the electrode substrate, along the alignment of the nematic liquid crystal composition. Conjugated polymers that are aligned perpendicular to electrode substrates are suitably used for applications such as condensers.

Further, by subjecting the silane coupling agent to rubbing treatment, in a case in which the nematic liquid crystal composition is aligned in a horizontal and uniaxial manner, the conjugated polymer generated by electropolymerization becomes a conjugated polymer that is oriented in a horizontal and uniaxial manner along the alignment of the nematic liquid crystal composition. Conjugated polymers that are uniaxially oriented exhibit high conductivity, and are suitably used for applications such as transparent electrodes, touch panels, organic EL devices and photovoltaic cells.

### EXAMPLES

Hereinafter, the invention will be concretely explained with reference to the examples. The examples are provided only for explanation of the invention, and the invention is not restricted to the examples.

### [Synthesis Example 1]

### <Synthesis of liquid crystal compound having high isotropic temperature (high Tiso)>

Nematic liquid crystal compound (1) was synthesized in accordance with the following scheme.

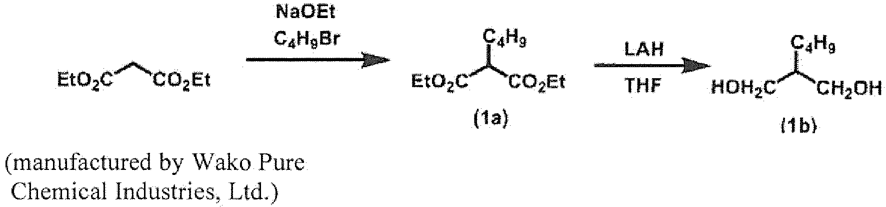

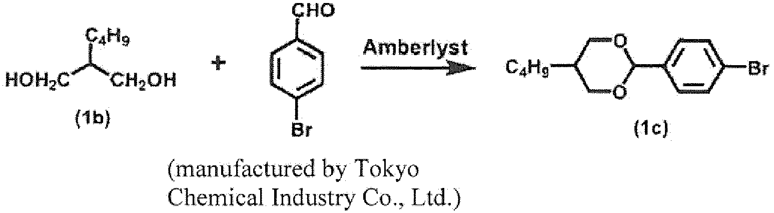

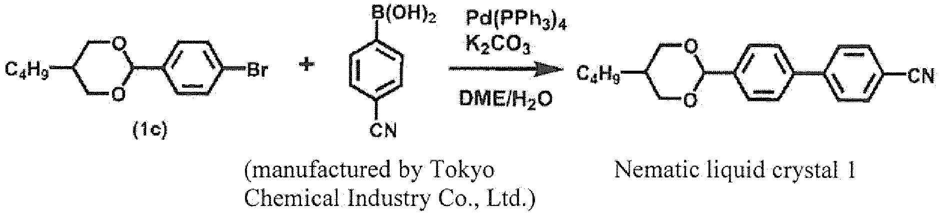

### (Synthesis of Compound 1a)

Diethyl malonate (20 g) was added to an ethanol solution (150 mL) of sodium ethoxide (8.5 g), agitated for 30 minutes, and n-butyl bromide (17.1 g) was dropped therein. After agitating for 4 hours at 70°C, the resultant was condensed under reduced pressure. After neutralizing the condensed residue with 1N HCl, it was added to a mixture of ethyl acetate and water. The organic layer was washed with salted fresh water and dried with magnesium sulfate, and condensed under reduced pressure. The condensed residue was purified with silica gel column chromatography (eluent: ethyl acetate/hexane = 1/10), thereby obtaining Compound 1a (21.9 g).

### (Synthesis of Compound 1b)

To a nitrogen-purged 500-mL three-neck flask, 1.0 mol/L of lithium aluminum hydride (100 mL, manufactured by Sigma-Aldrich Co. LLC.) was placed and the inside temperature was adjusted to 5°C or lower in an ice bath. Diethyl n-butyl malonate (8.0 g) was dissolved in 100 mL of dehydrated THF, and the solution was dropped with a dropping funnel over 30 minutes. After the dropping, the inside temperature was elevated to 65°C in a hot-water bath to reflux the reactant solution. 4 hours later, disappearance of raw materials was confirmed by thin-layer chromatography, and the reactant solution was cooled to 30°C or lower. Unreacted lithium aluminum hydride was decomposed by adding 10 mL of water to the reactant solution. 1N aqueous solution of hydrochloric acid was added until the pH was 2 or more, and the reactant solution was extracted three times with 50 mL of ethyl acetate. The obtained ethyl acetate solution was washed with saturated salt water and sodium bicarbonate water, and dried with magnesium sulfate. The magnesium sulfate was separated by filtration and the obtained solution was condensed, thereby obtaining 5.0 g of a crude product. This product was purified by flash column chromatography (hexane/ethyl acetate = 2/1), thereby obtaining Compound 1b (4.4 g).

### (Synthesis of Compound 1c)

To a flask, p-bromobenzaldehyde (5.6 g, manufactured by Tokyo Chemical Industry Co., Ltd.), Compound 1b (4.0 g), AMBERLIST (300 mg, manufactured by ICN Biomedicals) and toluene (30 mL) were added, and a Dean-Stark apparatus was attached to the flask, and refluxed while heating in an oil bath for 4 hours. The reactant solution was cooled with water and filtrated, and condensed under reduced pressure. The condensed residue was purified by silica gel chromatography (eluent: ethyl acetate/hexane = 1/8), thereby obtaining Compound 1c (2.8 g).

### (Synthesis of Nematic Liquid Crystal Compound 1)

Tetrakis (triphenylphosphine) palladium (0.76 g) was added to a solution containing Compound 1c (1.5 g), p-cyanophenyl boronic acid (1.44 g), potassium carbonate (5.4 g), 1,2-dimethoxyethane (45 mL) and water (45 mL), and the solution was agitated while heating at 80°C for 6 hours under a nitrogen atmosphere. The reactant solution was added to a mixture of ethyl acetate and 1N hydrochloric acid water. The organic layer was washed with 1N hydrochloric acid water, and then washed with saturated salt water, and dried with magnesium sulfate and condensed under reduced pressure. The condensed residue was purified by silica gel column chromatography (eluent: ethyl acetate/hexane = 1/8 to 1/6), and the obtained crude crystal was washed with methanol. Nematic Liquid Crystal Compound 1 (1.1 g) was thus obtained.

Identification of Nematic Liquid Crystal Compound 1 was carried out by elemental analysis, NMR and MASS spectrum. The appearance of Nematic Liquid Crystal Compound 1 was a white solid.

Identification of the liquid crystal phase of Nematic Liquid Crystal Compound 1 was carried out by observation with a polarization microscope, TG-DTA and DSC. The phase transition temperature was Cr1 128°C Cr2 136°C X 153°C N 237°C Iso. Cr1 refers to a crystal state, Cr2 refers to a crystal state that is different from Cr1 that appears between the crystal state of Cr1 and the state of X (different texture is observed with a polarization microscope), X refers to a high-order crystal phase that cannot be identified, N refers to a nematic phase, and Iso refers to an isotropic phase.

The clogP value was calculated with ChemDraw Ultra 8.0, and the result was 4.66.

### Nematic liquid crystal 1

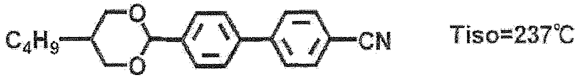

### (Synthesis of Nematic Liquid Crystal Compounds 2 to 4)

Nematic Liquid Crystal Compounds 2 to 4 were synthesized in a manner substantially similar to that in the synthesis of Nematic Liquid Crystal Compound 1, and the phase transition temperature and the clogP value were measured. The phase transition temperature and the clogP value of Nematic Liquid Crystal Compounds 2 to 4 as measured are described below.

### Nematic Liquid Crystal Compound 2

Phase transition temperatures: Cr1 149°C X 170°C N 231°C Iso, clogP = 4.13

### Nematic Liquid Crystal Compound 3

Phase transition temperatures: Cr1 133°C X 154°C N 236°C Iso, clogP = 5.19

### Nematic Liquid Crystal Compound 4

Phase transition temperatures: Cr1 116°C X 148°C N 214°C Iso, clogP = 6.78

### Nematic liquid crystal 2

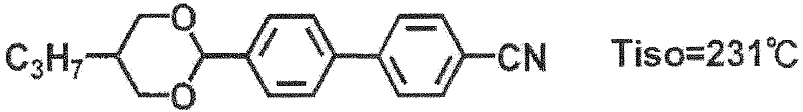

### Nematic liquid crystal 3

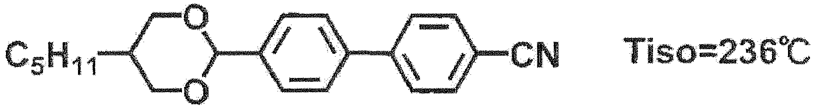

### Nematic liquid crystal 4

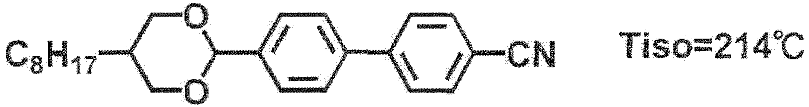

### [Preparation Example 1]

### <Preparation of Liquid Crystal Composition A having Low clogP>

Liquid Crystal Composition A having a low clogP value was prepared by mixing trans-4-(5-propyl-1,3-dioxan-2-yl)benzonitrile (1 g), trans-4-(5-butyl-1,3-dioxan-2-y1)benzonitrile (1 g) and trans-4-(5-pentyl-1,3-dioxan-2-yl)benzonitrile, and heating the mixture to melt on a hot plate.

The phase transition temperature and the clogP value of Liquid Crystal Composition A were measured in a manner similar to that in Synthesis Example 1. The phase transition temperature was N 41°C Iso (solid-liquid crystal transition temperature was 15°C or lower). The clogP value was 2.77.

### <Preparation of Liquid Crystal Compositions 1 to 11>

Any one of Nematic Liquid Crystals 1 to 4 or commercially available liquid crystal compounds as described below was mixed with Liquid Crystal Composition A prepared in Preparation Example 1, and the mixture was heated to melt on a hot plate, thereby obtaining a liquid crystal composition.

The phase transition temperature Tiso and the clogP value of the commercially available liquid crystal compounds were measured in a manner substantially similar to that in Example 1.

### NKV-3-141-1 (manufactured by Kanto Chemical Co., Inc.)

Phase transition temperature: Cr1 91°C N 176°C Iso, clogP = 7.735

### NKV-3-151-1 (manufactured by Kanto Chemical Co., Inc.)

Phase transition temperature: Cr 154°C Sm 129°C N 195°C Iso, clogP = 7.567

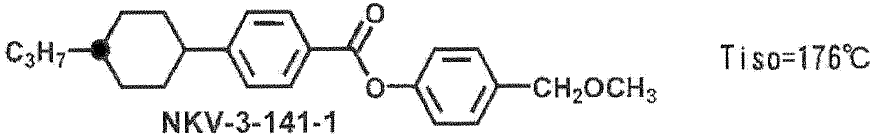

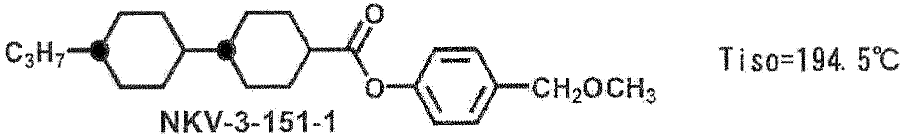

For comparison, liquid crystal compositions described in DE 3533252 A1 (Comparative Example 2) and Japanese Patent Application Laid-Open No. 2003-306531 (Comparative Example 1) were prepared.

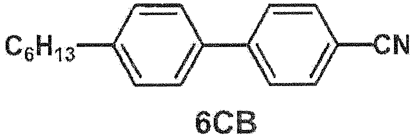

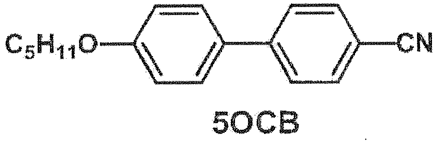

**[Table 1]**

| Liquid crystal Composition | | Tiso (°C) | clogP | Solid-liquid crystal Phase transition Temperature | Notes |
|---|---|---|---|---|---|
| 1 | Liquid crystal composition A (90%) | 59.5 | 2.96 | 25°C or lower | The invention |
| | Nematic liquid crystal compound 1 (10%) | | | | |
| 2 | Liquid crystal composition A (75%) | 79.4 | 3.66 | 25°C or lower | The invention |
| | Nematic liquid crystal compound 1 (10%) | | | | |
| | NKV-3-151-1 (manufactured by KANTO CHEMICAL CO., INC.) (15%) | | | | |
| 3 | Liquid crystal composition A (70%) | 76.0 | 3.91 | 25°C or lower | The invention |
| | Nematic liquid crystal compound 1 (10%) | | | | |
| | NKV-3-151-1 (manufactured by KANTO CHEMICAL CO., INC.) (10%) | | | | |
| | NKV-3-144-1 (manufactured by KANTO CHEMICAL CO., INC.) (10%) | | | | |
| 4 | Liquid crystal composition A (70%) | 79.5 | 4.19 | 25°C or lower | The invention |
| | NKV-3-151-1 (manufactured by KANTO CHEMICAL CO., INC.) (20%) | | | | |
| | NKV-3-144-1 (manufactured by KANTO CHEMICAL CO., INC.) (10%) | | | | |
| 5 | Liquid crystal composition A (80%) | 69.9 | 3.72 | 25°C or lower | The invention |
| | NKV-3-151-1 (manufactured by KANTO CHEMICAL CO., INC.) (10%) | | | | |
| | NKV-3-144-1 (manufactured by KANTO CHEMICAL CO., INC.) (10%) | | | | |
| 6 | Liquid crystal composition A (70%) | 85.7 | 3.90 | 25°C or lower | The invention |
| | Nematic liquid crystal compound 1 (10%) | | | | |
| | NKV-3-151-1 (manufactured by KANTO CHEMICAL CO., INC.) (20%) | | | | |
| 7 | Liquid crystal composition A (69%) | 91.8 | 3.73 | 25°C or lower | The invention |
| | Nematic liquid crystal compound 1 (8%) | | | | |
| | NKV-3-151-1 (manufactured by KANTO CHEMICAL CO., INC.) (15%) | | | | |
| | Nematic liquid crystal compound 2 (8%) | | | | |
| 8 | 6CB | 27 | 6.61 | 14°C | Comparative Example 1 |
| 9 | Acetonitrile (16.7%) | Non-liquid crystal | 1.35 | - | Comparative Example 2 |
| | Trans-4-(5-ethyl-1,3-dioxan-2-yl)benzonitrile (83.3%) | | | | |
| 10 | E-7 ((manufactured by MERCK KGaA) | 59 | 6.67 | lower than -30°C | Comparative Example 3 |
| 11 | 5OCB | 68 | 5.56 | 53°C | Comparative Example 4 |

As the result shows, Liquid Crystal Compositions 1 to 7 of the invention satisfy a solid-liquid crystal transition temperature of 25°C or lower, an isotropic transition temperature (Tiso) of 55°C or higher, and a clogP value of 6 or less.

### [Example 1]

### ∼Relationship among reactivity, Tiso and clogP∼

Liquid Crystal Composition 1 or 4 (94.5 mg) prepared in Preparation Example 1, 2,2':5', 2"-terthiophene (manufactured by Wako Pure Chemical Industries, Ltd.) (5 mg) and tetrabutyl ammonium perchlorate (0.5 mg) were heated to melt at 120 °C, and this was injected in a liquid crystal evaluation cell (manufactured by EHC, without oriented film, ITO resistance: 10Ω/square, gap: 50 µm).

The element as prepared was applied with a voltage of 4V at 25°C for 10 seconds with a potentiostat (manufactured by BAS Inc.). The change in transmission at 600 nm was measured with a multi-channel spectroscope (USB4000, manufactured by Ocean Optics, Inc.)

The rate of change in transmission (%) is defined as a change in transmission after the voltage application with respect to the transmission before the voltage application, provided that the change in transmission is almost 100% after the oxidative electropolymerization had progressed by 100%. The greater the rate of change in transmission is, the more the progression in polymerization is and the higher the reactivity is.

For comparison, the rate of change in transmission of Liquid Crystal Composition 8, 10, 11 or A was measured by applying a voltage in a manner substantially similar to that in the evaluation of Liquid Crystal Composition 1.

**[Table 2]**

| | Liquid crystal | Tiso (°C) | Solid-liquid crystal Phase transition Temperature | clogP | Change ratio of Transmittance | Notes |
|---|---|---|---|---|---|---|
| 1 | Liquid crystal Composition 1 | 59.5 | 25°C or lower | 2.96 | 77% | The invention |
| 2 | Liquid crystal Composition 4 | 79.5 | 25°C or lower | 4.19 | 65% | The invention |
| 3 | Liquid crystal Composition 8 | 27.0 | 14°C | 6.61 | 41% | Comparative Example 5 |
| 4 | Liquid crystal Composition 10 | 59.0 | lower than -30°C | 6.67 | 16% | Comparative Example 6 |
| 5 | Liquid crystal Composition A | 41.0 | 15°C or lower | 2.77 | 85% | Comparative Example 7 |
| 6 | Liquid crystal Composition 11 | 68 | 53°C | 5.56 | 0% | Comparative Example 8 |

Generally, as the isotropic transition temperature (Tiso) is increased, the liquid crystal viscosity also tends to be increased and the polymerization reactivity is significantly lowered (Comparative Example 6). However, as is shown in the results above, reactivity of oxidative electropolymerization of the liquid crystal compositions according to the invention, each having a clogP of 6 or less, hardly decreases even if the Tiso is high.

Further, it is found that the reactivity of a liquid crystal composition having a solid-liquid crystal transition temperature of 25°C or higher significantly decreases, even though the clogP is 6 or less (Comparative Example 8).

Moreover, Liquid Crystal Composition A having a low clogP (Comparative Example 7) exhibits a high rate of change in transmission, which indicates a high degree of reactivity in oxidative electropolymerization. However, as shown in Example 3 described below, the order parameter of the conjugated polymer obtained from Liquid Crystal Composition A is low, and a conjugated polymer with a high degree of order cannot be obtained.

### [Example 2]

### ∼Relationship among applied voltage and order parameter of obtained conjugated polymer∼

### <Silane coupling treatment 1 of substrate with ITO electrode>

A highly transparent glass plate with ITO (2.5 cm × 2.5 cm, manufactured by IGC) was washed with neutral detergent, and subjected to UV ozone treatment (6 minutes). The glass plate was immersed in a toluene solution of a silane coupling agent (cyanoethyltriethoxysilane, 1% by mass) and allowed to stand for one day at room temperature. The glass substrate was taken out from the toluene solution and washed with isopropyl alcohol, and was further immersed in isopropyl alcohol and ultrasonic washing was carried out for 20 minutes. The glass plate was washed with acetone, and was further immersed in neutral detergent and ultrasonic washing was carried out for 20 minutes. The glass plate was washed with distilled water, thereby obtaining ITO substrate 1 treated with a silane coupling agent.

The surface free energy of ITO substrate 1 as measured was 71 mN/m.

### <Oxidative electropolymerization>

Liquid Crystal Composition 1 as prepared above (94.5 mg), 2,2';5',2"-terthiophene (manufactured by Wako Pure Chemical Industries, Ltd.) (5 mg) and tetrabutylammonium perchlorate (0.5 mg) were heated to melt at 120 °C.

ITO substrate 1 treated with a silane coupling agent, prepared above, was subjected to rubbing treatment with a rubbing apparatus (manufactured by EHC), and the surface was washed with a nitrogen gas, and a ™KPTON tape (thickness: 35 µm) was attached as a spacer to the flames of the substrate.

The liquid composition as prepared above was dropped on the substrate, and another ITO substrate 1 treated with a silane coupling agent and subjected to rubbing treatment was attached thereon and fixed.

The obtained element was observed with a polarization microscope, and it was found that the liquid crystal composition was aligned in a horizontal and uniaxial manner. The color of the element was changed to dark blue when a voltage of 2V was applied for 10 minutes with a potentiostat (manufactured by BAS Inc.).

The substrate after conducting oxidative electropolymerization was immersed in methanol, acetone and methanol in this order, for 1 minute respectively, in order to remove the liquid crystal composition, residual monomers and supporting electrolyte. The substrate after washing was dried, and the polarized absorption spectrum was measured with a spectrophotometer (™V-670, manufactured by JASCO Corporation).

The order parameter of the obtained conjugated polymer was calculated from the obtained polarized absorption spectrum. Further, oxidative electropolymerization was conducted in a substantially similar manner, except that the applied voltage was changed to 3V, 4V.

**[Table 3]**

| Experimental No. | Liquid crystal Composition | Applied Voltage | Order Parameter |
|---|---|---|---|
| 1 | 1 | 2V | 0.29 |
| 2 | 1 | 3V | 0.15 |
| 3 | 1 | 4V | 0.07 |

As shown in the results in Table 3, it is revealed that the order parameter of the obtained conjugated polymer is decreased as the voltage is increased.

### [Example 3]

### ∼Relationship between phase transition temperature and order of obtained conjugated polymer∼

An element for electropolymerization was prepared in a substantially similar manner as that in Example 2, except that Liquid Composition 1 was changed to the liquid compositions shown in the following table. The color of the element was changed to dark blue after applying a voltage of 2V at 25°C for 10 minutes, and then applying a voltage of 3V for another 10 minutes, with a potentiostat (manufactured by BAS Inc.).

The substrate after conducting the oxidative electropolymerization was immersed in methanol, acetone and methanol in this order, for 1 minute respectively, in order to remove the liquid crystal composition, residual monomers and supporting electrolyte. The substrate after washing was dried, and the polarized absorption spectrum was measured with a spectrophotometer (™V-670, manufactured by JASCO Corporation). The order parameter of the obtained conjugated polymer was calculated from the obtained polarized absorption spectrum.

For comparison, oxidative electropolymerization was conducted in a substantially similar manner to the above, except that Liquid Crystal Composition 1 was changed to Liquid Crystal Compositions 8 to 10 and Liquid Crystal Composition A prepared in Preparation Example 1.

**[Table 4]**

| Liquid crystal Composition | Tiso (°C) | Solid-liquid crystal Phase transition Temperature | clogP | Order Parameter | Notes |
|---|---|---|---|---|---|
| 1 | 59.5 | 25°C or lower | 2.96 | 0.30 | The invention |
| 2 | 79.4 | 25°C or lower | 3.66 | 0.43 | The invention |
| 3 | 76.0 | 25°C or lower | 3.91 | 0.40 | The invention |
| 4 | 79.5 | 25°C or lower | 4.19 | 0.44 | The invention |
| 5 | 69.9 | 25°C or lower | 3.72 | 0.38 | The invention |
| 6 | 85.7 | 25°C or lower | 3.90 | 0.52 | The invention |
| 7 | 91.8 | 25°C or lower | 3.73 | 0.56 | The invention |
| 8 | 27 | 14°C | 6.61 | 0.15 | Comparative Example 9 |
| 9 | Non-liquid crystal | - | 1.35 | 0.01 | Comparative Example 10 |
| 10 | 59 | lower than -30°C | 6.67 | 0.16 | Comparative Example 11 |
| A | 41 | 15°C or lower | 2.77 | 0.15 | Comparative Example 12 |

As shown in Table 4, it is revealed that a conjugated polymer having a higher order parameter can be obtained in Liquid Crystal Compositions 1 to 7 according to the invention, as compared with Liquid Crystal Compositions 8 to 10 or Liquid Crystal Composition A as comparative examples.

In particular, although the isotropic transition temperature (Tiso) of Liquid Crystal Composition 1 according to the invention and Liquid Crystal Composition 10 for comparison is as high as 55 °C or higher, a conjugated polymer having a high order parameter (highly ordered) cannot be obtained in Liquid Crystal Composition 10 that has a clogP value of greater than 6. Accordingly, it is proved necessary to satisfy not only an isotropic transition temperature (Tiso) of 55°C or higher but also a clogP value of 6 or less.

### [Example 4]

### ∼Method of stepwise voltage application∼

The liquid crystal element described in Example 2 was applied with a voltage as described in the following table (25°C) for a time as described in the following table, with a potentiostat (manufactured by BAS Inc.). The reaction rate in a case of applying a voltage of 2V for 5 minutes was 8%, and the reaction rate in a case of applying a voltage of 3V for 5 minutes was 66%.

The substrate after carrying out the oxidative electropolymerization was immersed in methanol, acetone and methanol in this order, for 1 minute respectively, in order to remove the liquid crystal composition, residual monomers and supporting electrolyte. The substrate after washing was dried, and the polarized absorption spectrum was measured with a spectrophotometer (™V-670, manufactured by JASCO Corporation). The order parameter of the obtained conjugated polymer was calculated from the obtained polarized absorption spectrum. Further, the film thickness was measured with a stylus profilometer, and the result was used as an indicator for the reactivity of oxidative electropolymerization.

**[Table 5]**

| Voltage·Time | Order Parameter | Film Thickness |
|---|---|---|
| 2V·10min. → 3V·10min. | 0.30 | 300nm |
| 2V·20min. | 0.29 | 50nm |
| 3V·20min. | 0.15 | 310nm |

As shown in Table 5, it is demonstrated that a sufficient degree of progress in polymerization reaction is achieved while maintaining a high degree of order, by carrying out voltage application in a stepwise manner that includes application of a low first voltage by which electropolymerization slightly progresses, and application of a high second voltage at which a sufficient reaction rate is obtained.

### [Example 5]

### <Silane coupling treatment of substrate with ITO electrode 2>

Substrate 2 treated with a silane coupling agent was obtained in a substantially similar manner to the treatment method of Substrate 1, except that the silane coupling agent was changed to octadecyl trimethoxysilane.

### <Oxidative electropolymerization 5 (vertically oriented, horizontally oriented)>

Liquid Crystal Composition 4 as prepared above (94.5 mg), 2,2':5',2"-terthiophene (manufactured by Wako Pure Chemical Industries, Ltd. (5 mg) and tetrabutylammonium perchlorate (0.5 mg) were heated to melt at 120°C. ITO Substrate 2 treated with a silane coupling agent as prepared above was subjected to rubbing treatment with a rubbing apparatus (manufactured by EHC), and the surface was washed with a nitrogen gas, and a ™KPTON tape (thickness: 35 µm) was attached as a spacer to the flames of the substrate.

The liquid composition as prepared above was dropped on the substrate, and another ITO substrate 2 treated with a silane coupling agent and subjected to rubbing treatment was attached thereon and fixed. The obtained element was observed with a polarization microscope, and a dark field was observed and the liquid composition was aligned in a vertical manner.

The color of the element was changed to dark blue after applying a voltage of 2V for 10 minutes and applying a voltage of 3V for another 10 minutes with a potentiostat (manufactured by BAS Inc.).

The substrate after conducting the oxidative electropolymerization was immersed in methanol, acetone and methanol in this order, for 1 minute respectively, in order to remove the liquid crystal composition, residual monomers and supporting electrolyte. The substrate after washing was dried, and the polarized absorption spectrum was measured with a spectrophotometer (™V-670, manufactured by JASCO Corporation). The film thickness was measured with a stylus profilometer,

Oxidative electropolymerization was conducted in a substantially similar manner, except that ITO substrate 2 treated with a silane coupling agent (octadecyl) was used instead of ITO substrate 1 treated with a silane coupling agent (cyanoethyl) as prepared in Example 2. The element before carrying out the electropolymerization was observed with a polarization microscope. A bright field and anisotropy were observed, and it was confirmed that the liquid crystal was aligned in a horizontal and uniaxial manner.

The results are shown below.

**[Table 6]**

| Silane coupling Agent | Polarized Absorption (S-wave) | Polarized Absorption (P-wave) | Film Thickness | Notes |
|---|---|---|---|---|
| Octadecyl | 0.51 | 0.51 | 365nm | Vertical Orientation |
| Cyanoethyl | 1.64 | 0.49 | 360nm | Horizontal Orientation |

Generally, in a case in which polythiophene that is obtained by oxidative electropolymerization is aligned horizontally with respect to the ITO substrate (case (1)), the transition moment is horizontal with respect to the substrate. In a case in which polythiophene is vertically aligned (case (2)), the transition moment is vertical.

It is known in theory that when polythiophene is aligned in one direction (uniaxial), the absorbance in horizontal alignment in case (1) is given as (A//+A⊥)/2, and the absorbance in vertical alignment in case (2) is given as A⊥, wherein the polarized light absorption in a direction of long axis of the molecule is defined as A// and the polarized light absorption in a direction of short axis of the molecule is defined as A⊥.

Here, the values of A// and A⊥ calculated from the polarized light absorption spectrum in a state of horizontal uniaxial alignment (cyanoethyl silane coupling-treated substrate) conform with the absorption of polythiophene obtained with an octadecyl silane coupling-treated substrate. Accordingly, it is proved that polythiophene prepared by using ITO substrate 2 and Liquid Crystal Composition 4 according to the invention is vertically aligned with a high degree of order.

## Claims

1. A method of preparing a conjugated polymer comprising:
incorporating at least one monomer and 0.01 to 10% by mass of tetrabutylammonium perchlorate as a supporting electrolyte into a nematic liquid crystal composition, the amount of the supporting electrolyte being based upon 100% by mass of the nematic liquid crystal composition; and
electropolymerizing the at least one monomer incorporated in the nematic liquid crystal composition,
**characterized in that** the conjugated polymer is polythiophene and the nematic liquid crystal composition has a solid-liquid crystal phase transition temperature of 25°C or lower, an isotropic phase transition temperature of 55°C or higher, and a clogP value of 6 or less calculated with ChemDraw Ultra 8.0 based on the Hansch-Leo fragment method, the solid-liquid crystal phase transition temperature and the isotropic phase transition temperature being measured by a method in which the liquid crystal phase is identified with a polarization microscope.

2. A method according to Claim 1, wherein the content of non-liquid crystal liquid other than the monomer in the nematic liquid crystal composition is 5% by mass or less.

3. A method according to Claim 1 or Claim 2, wherein the nematic liquid crystal composition comprises at least one compound having an isotropic phase transition temperature of 100°C or higher.

4. A method according to Claim 3, wherein the nematic liquid crystal composition further comprises at least one compound having a solid-liquid crystal phase transition temperature of 40°C or lower.

5. A method according to any preceding claim, wherein the nematic liquid crystal composition comprises at least one dioxane compound.

6. A method according to any preceding claim, wherein the electropolymerizing is performed at a temperature of 50°C or lower.

7. A method according to any preceding claim, wherein the nematic liquid crystal composition incorporating the at least one monomer and the supporting electrolyte is disposed between a pair of electrode substrates facing each other.

8. A method according to Claim 7, wherein the electrode substrates have been treated with a silane coupling agent.

9. A method according to Claim 7 or Claim 8, wherein the electrode substrates have been treated by rubbing.

10. A method according to any of Claims 7 to 9, wherein the nematic liquid crystal composition orientates horizontally with respect to the electrode substrates when a voltage is applied to the electrode substrates.

11. A method according to any of Claims 7 to 9, wherein the nematic liquid crystal composition orientates vertically with respect to the electrode substrates when a voltage is applied to the electrode substrates.

12. A method according to any of Claims 7 to 11, wherein the nematic liquid crystal composition orientates uniaxially when a voltage is applied to the electrode substrates.

## Patentansprüche

1. Verfahren zur Herstellung eines konjugierten Polymers, das folgendes umfasst:
Einbringen von mindestens einem Monomer und 0,01 bis 10 Massen-% Tetrabutylammoniumperchlorat als ein Trägerelektrolyt in eine nematische Flüssigkristallzusammensetzung, wobei die Menge des Trägerelektrolyten bezogen ist auf 100 Massen-% der nematischen Flüssigkristallzusammensetzung; und
Elektropolymerisieren des mindestens einen Monomers, das in die nematische Flüssigkristallzusammensetzung eingebracht wurde,
**dadurch gekennzeichnet, dass** das konjugierte Polymer ein Polythiophen ist und die nematische Flüssigkristallzusammensetzung eine Fest-Flüssig-Kristall-Phasen-Übergangstemperatur von 25 °C oder niedriger, eine isotrope Phasenübergangstemperatur von 55 °C oder höher und einen clogP-Wert von 6 oder weniger, berechnet mit ChemDraw Ultra 8.0 auf Basis des Hansch-Leo-Fragment-Verfahrens (Hansch-Leo fragment method) aufweist, wobei die Fest-Flüssig-Kristall-Phasen-Übergangstemperatur und die isotrope Phasenübergangstemperatur durch ein Verfahren gemessen werden, bei dem die Flüssigkristallphase mit einem Polarisationsmikroskop identifiziert wird.

2. Verfahren gemäß Anspruch 1, bei dem der Gehalt von Nicht-Flüssigkristallflüssigkeit ausgenommen des Monomers in der nematischen Flüssigkristallzusammensetzung 5 Massen-% oder weniger beträgt.

3. Verfahren gemäß Anspruch 1 oder Anspruch 2, bei dem die nematische Flüssigkristallzusammensetzung mindestens eine Verbindung mit einer isotropen Phasenübergangstemperatur von 100 °C oder höher umfasst.

4. Verfahren gemäß Anspruch 3, bei dem die nematische Flüssigkristallzusammensetzung ferner mindestens eine Verbindung mit einer Fest-Flüssig-Kristall-PhasenÜbergangstemperatur von 40 °C oder niedriger umfasst.

5. Verfahren gemäß mindestens einem der vorhergehenden Ansprüche, bei dem die nematische Flüssigkristallzusammensetzung mindestens eine Dioxanverbindung umfasst.

6. Verfahren gemäß mindestens einem der vorhergehenden Ansprüche, bei dem das Elektropolymerisieren bei einer Temperatur von 50 °C oder niedriger durchgeführt wird.

7. Verfahren gemäß mindestens einem der vorhergehenden Ansprüche, bei dem die nematische Flüssigkristallzusammensetzung, in die das mindestens eine Monomer und der Trägerelektrolyt eingebracht wurden, zwischen einem Paar von Elektrodensubstraten, die einander gegenüberliegen, angeordnet ist.

8. Verfahren gemäß Anspruch 7, bei dem die Elektrodensubstrate mit einem Silankupplungsmittel behandelt wurden.

9. Verfahren gemäß Anspruch 7 oder Anspruch 8, bei dem die Elektrodensubstrate durch Reiben behandelt wurden.

10. Verfahren gemäß mindestens einem der Ansprüche 7 bis 9, bei dem sich die nematische Flüssigkristallzusammensetzung in Bezug auf die Elektrodensubstrate horizontal ausrichtet, wenn eine Spannung an die Elektrodensubstrate angelegt wird.

11. Verfahren gemäß mindestens einem der Ansprüche 7 bis 9, bei dem sich die nematische Flüssigkristallzusammensetzung in Bezug auf die Elektrodensubstrate vertikal ausrichtet, wenn eine Spannung an die Elektrodensubstrate angelegt wird.

12. Verfahren gemäß mindestens einem der Ansprüche 7 bis 11, bei dem sich die nematische Flüssigkristallzusammensetzung uniaxial ausrichtet, wenn eine Spannung an die Elektrodensubstrate angelegt wird.

## Revendications

1. Procédé de préparation d'un polymère conjugué, comprenant :
l'incorporation d'au moins un monomère et de 0,01 à 10 % en masse de perchlorate de tétrabutylammonium en tant qu'électrolyte de support dans une composition de cristal liquide nématique, la quantité d'électrolyte de support étant sur la base de 100 % en masse de la composition de cristal liquide nématique ; et
l'électropolymérisation de l'au moins un monomère incorporé dans la composition de cristal liquide nématique,
**caractérisé en ce que** le polymère conjugué est du polythiophène et la composition de cristal liquide nématique présente une température de transition de phase cristalline solide-liquide de 25 °C ou moins, une température de transition de phase isotrope de 55 °C ou plus, et une valeur de clogP de 6 ou moins calculée avec ChemDraw Ultra 8.0 sur la base du procédé des fragments de Hansch-Leo, la température de transition de phase cristalline solide-liquide et la température de transition de phase isotrope étant mesurées par un procédé dans lequel la phase cristalline liquide est identifiée avec un microscope à polarisation.

2. Procédé selon la revendication 1, dans lequel la teneur en cristal liquide non liquide autre que le monomère dans la composition de cristal liquide nématique est de 5 % en masse ou moins.

3. Procédé selon la revendication 1 ou la revendication 2, dans lequel la composition de cristal liquide nématique comprend au moins un composé ayant une température de transition de phase isotrope de 100 °C ou plus.

4. Procédé selon la revendication 3, dans lequel la composition de cristal liquide nématique comprend en outre au moins un composé ayant une température de transition de phase cristalline solide-liquide de 40 °C ou moins.

5. Procédé selon l'une quelconque des revendications précédentes, dans lequel la composition de cristal liquide nématique comprend au moins un composé de dioxane.

6. Procédé selon l'une quelconque des revendications précédentes, dans lequel l'électropolymérisation est effectuée à une température de 50 °C ou moins.

7. Procédé selon l'une quelconque des revendications précédentes, dans lequel la composition de cristal liquide nématique incorporant l'au moins un monomère et l'électrolyte de support est disposée entre une paire de substrats d'électrode se faisant face.

8. Procédé selon la revendication 7, dans lequel les substrats d'électrode ont été traités avec un agent adhésif au silane.

9. Procédé selon la revendication 7 ou la revendication 8, dans lequel les substrats d'électrode ont été traités par ponçage.

10. Procédé selon l'une quelconque des revendications 7 à 9, dans lequel la composition de cristal liquide nématique s'oriente horizontalement par rapport aux substrats d'électrode lorsqu'une tension est appliquée aux substrats d'électrode.

11. Procédé selon l'une quelconque des revendications 7 à 9, dans lequel la composition de cristal liquide nématique s'oriente verticalement par rapport aux substrats d'électrode lorsqu'une tension est appliquée aux substrats d'électrode.

12. Procédé selon l'une quelconque des revendications 7 à 11, dans lequel la composition de cristal liquide nématique s'oriente de façon uniaxiale lorsqu'une tension est appliquée aux substrats d'électrode.
